# EUROPÄISCHE PATENTSCHRIFT

(11) **EP 1 965 680 B1**
(45) Veröffentlichungstag und Bekanntmachung des Hinweises auf die Patenterteilung: **23.03.2011**
(21) Anmeldenummer: 06841476.2
(22) Anmeldetag: 19.12.2006
(51) Int. Cl.: A47B 88/04, F24C 15/16

(54) **SCHNELLBEFESTIGUNGSELEMENT**
QUICK-FIXING ELEMENT
ELEMENT DE FIXATION RAPIDE

(30) Priorität: 29.12.2005 DE 202005020458 U
(43) Veröffentlichungstag der Anmeldung: 10.09.2008
(73) Patentinhaber: Paul Hettich GmbH & Co. KG, 32278 Kirchlengern (DE)
(72) Erfinder: WITTGREBE, Achim, 33699 Bielefeld (DE)
(74) Vertreter: Dantz, Jan Henning
(86) Internationale Anmeldenummer: PCT/EP2006/069939
(87) Internationale Veröffentlichungsnummer: WO 2007/074114

(56) Entgegenhaltungen:
- DE-U1- 20 010 037
- DE-U1-202004 005 475

## Beschreibung

Die vorliegende Erfindung betrifft ein Schnellbefestigungselement zur Befestigung von Führungsschienen an horizontal verlaufenden und im Endbereich von einer Führungsschiene winklig abgebogenen Stangen eines gitterartigen Seitenteiles.

Schnellbefestigungselemente der gattungsgemäßen Art sind an sich bekannt, beispielsweise aus der DE 200 10 037 U1, oder der DE 20 2004 005 475 U1.

Verwendung finden diese Schnellbefestigungselemente vorrangig zur Festlegung von Führungsschienen in Haushaltsgeräten, wie Geschirrspülern, Backöfen oder dergleichen, ein Einsatz in anderen Möbeln ist aber ebenfalls denkbar.

Bei den gitterähnlichen Seitenteilen, die aus Draht oder Stangen gebildet sind, sind mehrere parallel zueinander verlaufende horizontale Stangen vorgesehen, die in ihren Endbereichen derart abgewinkelt sind, dass die abgewinkelten Abschnitte von einer zu befestigenden Führungsschiene in Richtung einer Seitenwand eines Haushaltsgerätes oder eines Möbels vorstehen.

Der vorliegenden Erfindung liegt die Aufgabe zugrunde, ein Schnellbefestigungselement der gattungsgemäßen Art zu schaffen, welches eine einwandfreie Halterung einer Führungsschiene an lediglich einer horizontal verlaufenden Stange eines gitterartigen Seitenteiles ermöglicht.

Diese Aufgabe wird erfindungsgemäß dadurch gelöst, dass das Schnellbefestigungselement einen ersten, eine Stange in ihrem Längserstreckungsbereich und einen zweiten, die Stange in ihrem abgewinkelten Endbereich teilweise umgreifenden, klammerartigen Halteabschnitt aufweist und in horizontaler Richtung auf den Endbereich einer Stange aufschiebbar ist.

Durch diese Konstruktion wird eine - bezogen auf die Längsachse einer horizontal verlaufenden Stange - verdreh- oder kippsichere Festlegung einer Führungsschiene ermöglicht, da das Schnellbefestigungselement mit seinem zweiten, die Stange in ihrem abgewinkelten Endbereich teilweise umgreifenden klammerartigen Halteabschnitt eine Kippsicherung bildet. Da zur Festlegung einer Führungsschiene an einer Stange in beiden Endbereichen der Führungsschiene und somit auch der Stange entsprechende Schnellbefestigungselement Verwendung finden, werden beide Endbereiche der abgewinkelten Stange umgriffen, so dass nicht nur die angestrebte Verdreh- oder Kippsicherung erzielt wird, sondern es wird auch noch der Vorteil erreicht, dass eine Längsverschiebung des an der Stange festgelegten Führungsschienenteiles verhindert wird.

Ein unbeabsichtigtes Lösen des Schnellbefestigungselementes von einer Stange kann erreicht werden dadurch, dass das Schnellbefestigungselement klemmend, also weitestgehend reibschlüssig, auf die Stange aufgeschoben wird. Eine andere Möglichkeit besteht darin, einen Schenkel des die Stange in ihrem Längserstreckungsbereich umgreifenden Halteabschnittes mit einer federnden Rastzunge auszustatten, welche bei aufgeschobenen Schnellbefestigungselement an einem der Führungsschiene abgewandten Bereich der Stange anliegt.

Bei dieser Lösung wäre also ein gewisser Formschluss gegen unbeabsichtigtes Lösen des Schnellbefestigungselementes von einer Stange erreicht. Da die Rastzunge federnd ausgebildet ist, kann unter Aufwendung eines gewissen Kraftaufwandes aber eine bewusste Lösung des Schnellbefestigungselementes und damit der Führungsschiene von der Stange herbeigeführt werden, wie es beispielsweise zum Zwecke der Reinigung sowohl der Führungsschiene wie auch des gitterartigen Seitenteiles erforderlich werden kann.

Weitere Merkmale der Erfindung sind Gegenstand weiterer Unteransprüche.

Ein Ausführungsbeispiel der Erfindung ist in den beigefügten Zeichnungen dargestellt und wird im folgenden näher beschrieben.

Es zeigen:
- Figuren 1 - 3: in verschiedenen Blickrichtungen gesehene, perspektivische Dar- stellungen einer Führungsschiene mit daran befestigten Schnell- befestigungselementen gemäß vorliegender Erfindung,
- Figur 4: eine schematisch dargestellte Draufsicht auf eine Führungsschie- ne mit Schnellbefestigungselementen sowie einer horizontal ver- laufenden Stange, an denen die Schnellbefestigungselemente und damit die Führungsschiene lösbar befestigt sind
- Figur 5: einen Schnitt nach der Linie VV in Figur 4.

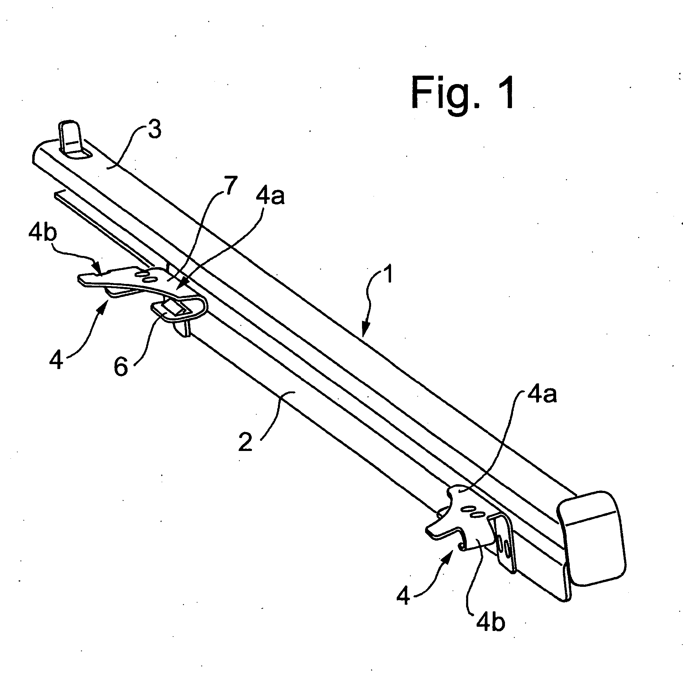

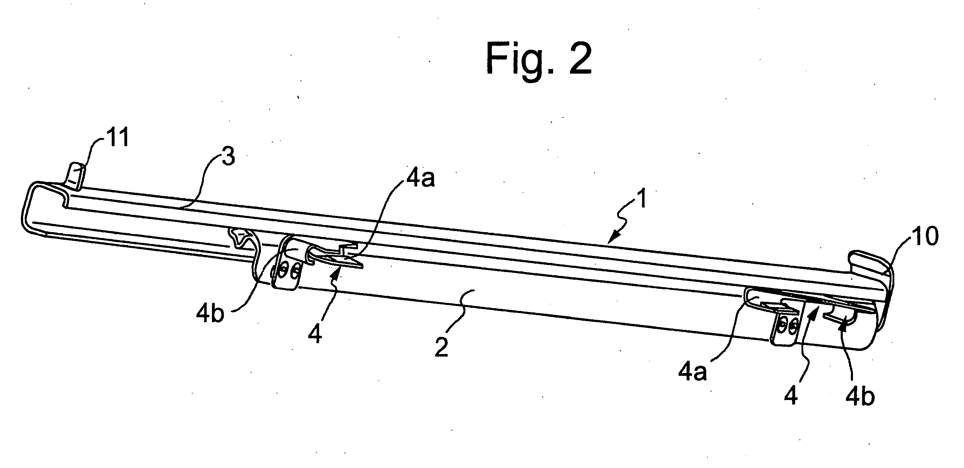

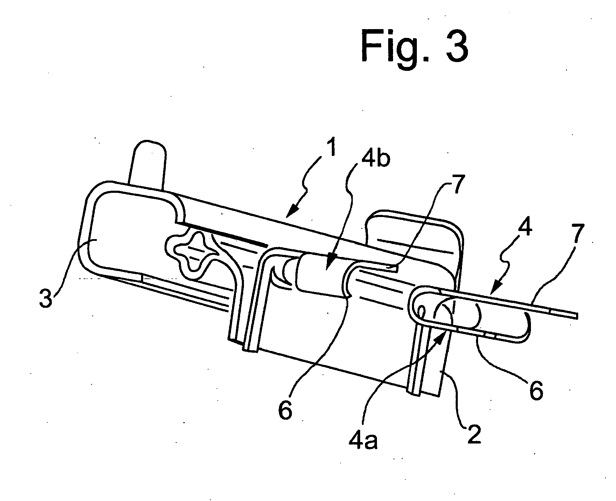

In den Figuren 1 - 3 ist jeweils mit dem Bezugszeichen 1 eine Führungsschiene bezeichnet, die eine in einem Backofen oder dergleichen festlegbare Korpusschiene 2 und eine demgegenüber längs verschiebbare Laufschiene 3 aufweist.

An der Korpusschiene 2 sind in deren Endbereichen Schnellbefestigungselemente 4 befestigt.

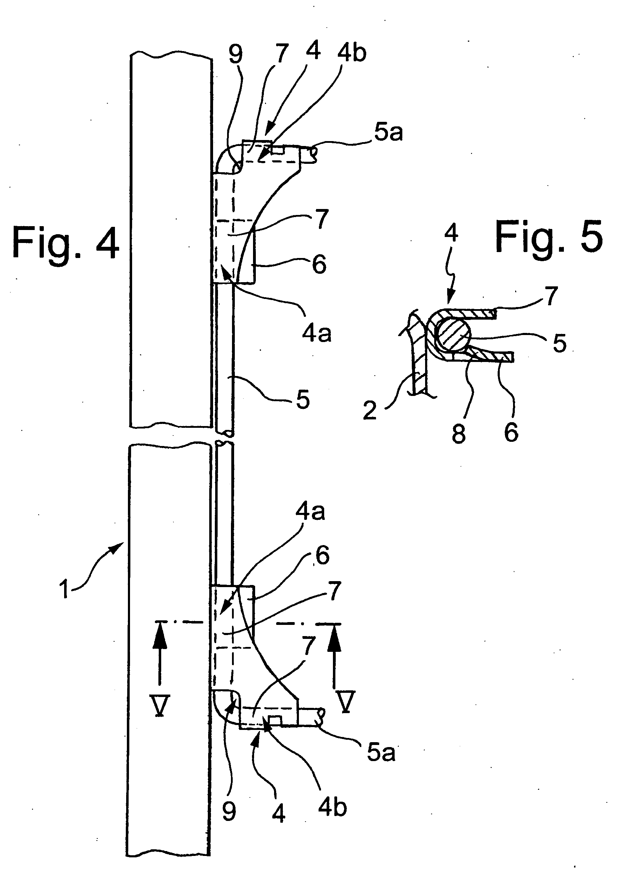

In Figur 4 sind die besagten Schnellbefestigungselemente 4 in einer Draufsicht und im montieren Zustand gezeigt. Figur 4 zeigt deutlich, dass die Schnellbefestigungselemente 4 an einer horizontal verlaufenden Stange 5 eines nicht weiter dargestellten, gitterartigen Seitenteiles festgelegt sind.

Die Stange 5 ist in ihren Endbereichen gegenüber der Führungsschiene 1 winklig abgebogen, wobei sich im dargestellten Ausführungsbeispiele diese abgebogenen Endbereiche 5a etwa rechtwinklig zur Führungsschiene 1 erstrecken. Hier sind selbstverständlich auch andere Winkelbereiche als 90° denkbar.

Die Schnellbefestigungselemente 4 weisen jeweils einen ersten, die Stange 5 in ihrem Längserstreckungsbereich und einen zweiten, die Stange 5 in ihrem abgewinkelten Endbereich 5a teilweise umgreifenden, klammerartigen Halteabschnitt 4a und 4b auf. Dabei sind diese klammerartigen Halteabschnitte 4a und 4b derart ausgebildet, dass jedes Schnellbefestigungselement 4 in horizontaler Richtung auf den Endbereich einer Stange 5 aufschiebbar ist.

Die jeweiligen Halteabschnitte 4a und 4b sind im Querschnitt etwa C-förmig ausgebildet, wie dies Figur 5 beispielsweise deutlich zeigt, und weisen jeweils einen unteren und einen oberen Schenkel 6 bzw. 7 auf. Dabei liegt der jeweils obere Schenkel 7 auf der Stange 5 auf und der untere Schenkel 6 liegt an der Unterseite der Stange 5 an. Dabei besteht die Möglichkeit, den Abstand zwischen den beiden Schenkeln 6 und 7 so zu wählen, dass eine klemmende Aufschiebung der Schnellbefestigungselemente 4 auf die Stange 5 bzw. deren abgewinkelten Bereiche 5a erreicht wird.

In jedem Falle ist die Führungsschiene 1, an deren Korpusschiene 2 die Schnellbefestigungselemente 4 beispielsweise durch Verschweißung oder dergleichen befestigt sind, kippsicher bzw. verdrehsicher gegenüber der Stange 5 festgelegt, da durch den zweiten klammerartigen Haltebereich 4b jedes Schnellbefestigungselementes 4 auch der abgewinkelte Endbereich 5a der Stange 5 umgriffen wird.

Außerdem wird durch diese Art der Befestigung eine relative Längsverschiebung der Korpusschiene 2 gegenüber der Stange 5 verhindert.

In Figur 5 ist gezeigt, dass der untere Schenkel 6 des klammerartigen Halteteiles 4a, welches den Längserstreckungsbereich der Stange 5 umgreift, mit einer in Richtung der Stange 5 weisenden federnden Rastzunge 8 ausgestattet ist. Diese federnde Rastzunge 8 liegt im montierten Zustand, so wie in Figur 5 gezeigt, an einem der Korpusschiene 2 und somit auch der Führungsschiene 1 abgewandten Bereich der Stange 5 an, so dass ein ungewolltes Lösen des Schnellbefestigungselementes 4 von der Stange 5 hier praktisch durch Formschluss verhindert wird. Lediglich durch einen gewissen Kraftaufwand kann also bewusst eine Trennung des Schnellbefestigungselementes 4 und damit der Führungsschiene 1 von der Stange 5 herbeigeführt werden.

Im Übergangsbereich zwischen dem Längserstreckungsbereich der Stange 5 und den abgewinkelten Endbereichen 5a dieser Stange 5 sind die Schnellbefestigungselemente 4 jeweils mit einem Freischnitt 9 versehen.

Durch die erfindungsgemäßen Schnellbefestigungselemente besteht die Möglichkeit, Führungsschienen 1 an lediglich einer Stange 5 eines gitterartigen Seitenteiles verdrehsicher und kippsicher festzulegen.

Wie die Figuren 1 bis 3 zeigen, weist die Führungsschiene 1 insgesamt einen relativ einfachen Aufbau auf. Die wälzkörpergelagerte Laufschiene 3 ist gegenüber der Korpusschiene 2 lediglich noch über drei Laufbahnen mit Wälzkörpern versehen.

An einem stirnseitigen Ende der Laufschiene ist - statt wie bisher üblich - eines Gusstopfens ein geschweißter Stirnanschlag 10 und im anderen Endbereich - an Stelle eines geschweißten Anschlagbolzens - eine ausgestellte Brechlasche 11 vorgesehen, um beispielsweise ein Backblech, einen Gitterrost, eine Saftpfanne oder dergleichen auf der Laufschiene 3 in Verschieberichtung zu sichern. Eine derartige Führungsschiene ist besonders kostengünstig herstellbar, ohne letztendlich funktionelle Nachteile mit sich zu bringen. Selbstverständlich sind aber auch andere Führungsschienen 1 in Verbindung mit erfindungsgemäßen Schnellbefestigungselementen 4 verwendbar.

Die Schnellbefestigungselemente 4 sind vorzugsweise aus Metall hergestellt. Dabei ist eine einstückige Fertigung bevorzugt. Die Gestaltung der Schnellbefestigungselemente ermöglicht es, diese als Stanz-Biegeteile besonders preiswert herzustellen.

Die Rastzunge 8 ist vorteilhafterweise durch einen aus dem Material des unteren Schenkels 6 herausgeprägten Abschnitt gebildet.

## Patentansprüche

1. Schnellbefestigungselement (4) zur Befestigung von Führungsschienen (1) an horizontal verlaufenden und im Endbereich von einer Führungsschiene (1) winklig abgebogenen Stangen (5) eines gitterartigen Seitenteiles, **dadurch gekennzeichnet, dass** das Schnellbefestigungselement (4) einen ersten, eine Stange (5) in ihrem Längserstreckungsbereich und einen zweiten, die Stange (5) in ihrem abgewinkelten Endbereich (5a) teilweise umgreifenden, klammerartigen Halteabschnitt (4a, 4b) aufweist und in horizontaler Richtung auf den Endbereich einer Stange (5) aufschiebbar ist.

2. Schnellbefestigungselement nach Anspruch 1, **dadurch gekennzeichnet, dass** der jeweilige Halteabschnitt (4a, 4b) im Querschnitt etwa C-förmig ausgebildet ist und einen unteren und einen oberen Schenkel (6, 7) aufweist, wobei der jeweils obere Schenkel (7) auf der Stange (5) aufliegt und der untere Schenkel (6) an der Unterseite der Stange (5) anliegt.

3. Schnellbefestigungselement nach Anspruch 1 oder 2, **dadurch gekennzeichnet, dass** der untere Schenkel (6) des die Stange (5) in ihrem Längserstreckungsbereich umgreifenden Halteabschnittes (4a) mit einer federnden Rastzunge (8) versehen ist, welche bei aufgeschobenem Schnellbefestigungselement (4) an einem der Führungsschiene (1) abgewandten Bereich der Stange (5) anliegt.

4. Schnellbefestigungselement nach Anspruch 3, **dadurch gekennzeichnet, dass** die Rastzunge (8) durch einen aus dem Material des unteren Schenkels (6) herausgeprägten Abschnitt besteht.

5. Schnellbefestigungselement nach einem der vorhergehenden Ansprüche, **dadurch gekennzeichnet, dass** das Schnellbefestigungselement (4) im Übergangsbereich zwischen dem abgewinkelten Endbereich (5a) und dem Längserstreckungsbereich der Stange (5) mit einem Freischnitt (9) versehen ist.

6. Schnellbefestigungselement nach einem der vorhergehenden Ansprüche, **dadurch gekennzeichnet, dass** das Schnellbefestigungselement (4) einstückig hergestellt ist.

7. Schnellbefestigungselement nach einem der vorhergehenden Ansprüche, **dadurch gekennzeichnet, dass** das Schnellbefestigungselement (4) aus Metall gefertigt ist.

8. Schnellbefestigungselement nach einem der vorhergehenden Ansprüche, **dadurch gekennzeichnet, dass** das Schnellbefestigungselement (4) als StanzBiegeteil ausgebildet ist.

9. Schnellbefestigungselement nach einem der vorhergehenden Ansprüche, **dadurch gekennzeichnet, dass** das Schnellbefestigungselement (4) klemmend auf eine Stange (5) bzw. deren abgewinkelten Endbereich (5a) aufschiebbar ist.

## Claims

1. Quick-fixing element (4) for fixing guide rails (1) to horizontally running rods (5) of a grid-type side part, which rods are bent away at an angle in the end region from a guide rail (1), **characterized in that** the quick-fixing element (4) has a first clip-type retaining section (4a), which partially engages around a rod (5) in its longitudinal extent region, and a second clip-type retaining section (4b), which partially engages around the rod (5) in its angled end region (5a), and can be pushed in the horizontal direction onto the end region of a rod (5).

2. Quick-fixing element according to Claim 1, **characterized in that** the respective retaining section (4a, 4b) is of approximately C-shaped design in cross section and has a lower and an upper limb (6, 7), wherein the respective upper limb (7) rests on the rod (5) and the lower limb (6) bears against the lower side of the rod (5).

3. Quick-fixing element according to Claim 1 or 2, **characterized in that** the lower limb (6) of the retaining section (4a), which engages around the rod (5) in its longitudinal extent region, is provided with a resilient latching tongue (8) which, when the quick-fixing element (4) is pushed on, bears against a region of the rod (5) that faces away from the guide rail (1).

4. Quick-fixing element according to Claim 3, **characterized in that** the latching tongue (8) comprises a section which is punched out of the material of the lower limb (6).

5. Quick-fixing element according to one of the preceding claims, **characterized in that** the quick-fixing element (4) is provided with a clearance cut (9) in the transition region between the angled end region (5a) and the longitudinal extent region of the rod (5).

6. Quick-fixing element according to one of the preceding claims, **characterized in that** the quick-fixing element (4) is produced as a single piece.

7. Quick-fixing element according to one of the preceding claims, **characterized in that** the quick-fixing element (4) is manufactured from metal.

8. Quick-fixing element according to one of the preceding claims, **characterized in that** the quick-fixing element (4) is designed as a punched and bent part.

9. Quick-fixing element according to one of the preceding claims, **characterized in that** the quick-fixing element (4) can be pushed in a clamping manner onto a rod (5) or the angled end region (5a) thereof.

## Revendications

1. Elément de fixation rapide (4) servant à fixer des rails de guidage (1) sur des barres (5), s'étendant horizontalement et coudées dans la zone d'extrémité en s'éloignant d'un rail de guidage (1), d'une pièce latérale de type grille, **caractérisé en ce que** l'élément de fixation rapide (4) présente une première section de retenue (4a, 4b) de type agrafe, entourant en partie une barre (5) dans sa zone d'extension longitudinale et une deuxième section de retenue (4a, 4b) de type agrafe, entourant en partie la barre (5) dans sa zone d'extrémité coudée (5a) et peut être poussé dans le sens horizontal sur la zone d'extrémité d'une barre (5).

2. Elément de fixation rapide selon la revendication 1, **caractérisé en ce que** la section de retenue respective (4a, 4b) est réalisée avec une section transversale à peu près en forme de C et présente une branche inférieure et une branche supérieure (6, 7), la branche respectivement supérieure (7) reposant sur la barre (5) et la branche inférieure (6) s'appliquant contre la face inférieure de la barre (5).

3. Elément de fixation rapide selon la revendication 1 ou 2, **caractérisé en ce que** la branche inférieure (6) de la section de retenue (4a) entourant la barre (5) dans sa zone d'extension longitudinale est dotée d'une languette d'arrêt (8) élastique, qui lorsque l'élément de fixation rapide (4) est poussé dessus, s'applique contre une zone de la barre (5) opposée au rail de guidage (1).

4. Elément de fixation rapide selon la revendication 3, **caractérisé en ce que** la languette d'arrêt (8) se compose d'une section ressortant du matériau de la branche inférieure (6).

5. Elément de fixation rapide selon l'une quelconque des revendications précédentes, **caractérisé en ce que** l'élément de fixation rapide (4) est doté dans la zone de transition entre la zone d'extrémité coudée (5a) et la zone d'extension longitudinale de la barre (5) d'un dégagement (9).

6. Elément de fixation rapide selon l'une quelconque des revendications précédentes, **caractérisé en ce que** l'élément de fixation rapide (4) est fabriqué d'un seul tenant.

7. Elément de fixation rapide selon l'une quelconque des revendications précédentes, **caractérisé en ce que** l'élément de fixation rapide (4) est en métal.

8. Elément de fixation rapide selon l'une quelconque des revendications précédentes, **caractérisé en ce que** l'élément de fixation rapide (4) est réalisé sous forme de pièce pliée découpée.

9. Elément de fixation rapide selon l'une quelconque des revendications précédentes, **caractérisé en ce que** l'élément de fixation rapide (4) peut être poussé par pincement sur une barre (5) respectivement sur sa zone d'extrémité coudée (5a).
